(19) Europäisches Patentamt
European Patent Office
Office européen des brevets

(11) EP 0 765 291 B1

(12) EUROPEAN PATENT SPECIFICATION

(45) Date of publication and mention of the grant of the patent:
**28.04.1999 Bulletin 1999/17**

(21) Application number: **95924596.0**

(22) Date of filing: **16.06.1995**

(51) Int Cl.[6]: **C01G 25/02**

(86) International application number:
**PCT/US95/07636**

(87) International publication number:
**WO 95/35260 (28.12.1995 Gazette 1995/55)**

# (54) PROCESS FOR TREATING ZIRCON

VERFAHREN ZUR BEHANDLUNG VON ZIRKON

PROCEDE DE TRAITEMENT DE ZIRCON

(84) Designated Contracting States:
**AT BE DE ES FR GB GR IE IT NL PT**

(30) Priority: **17.06.1994 ZA 9404342**
**21.02.1995 ZA 9501432**

(43) Date of publication of application:
**02.04.1997 Bulletin 1997/14**

(73) Proprietor: **ATOMIC ENERGY CORPORATION OF SOUTH AFRICA LIMITED**
**Transvaal Province (ZA)**

(72) Inventors:
- **DE WET, Willem, Johannes**
  **Pretoria 0186 (ZA)**
- **DE BEER, Jacob, Adriaan**
  **Pretoria West 0183 (ZA)**

(74) Representative: **Barlow, Roy James**
**J.A. KEMP & CO.**
**14, South Square**
**Gray's Inn**
**London WC1R 5LX (GB)**

(56) References cited:
**CH-A- 217 388**
**FR-A- 2 103 881**
**US-A- 3 811 907**
**US-A- 4 118 464**
**US-A- 4 755 365**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 765 291 B1

Printed by Jouve, 75001 PARIS (FR)

## Description

THIS INVENTION relates to a process for treating zircon.

The Applicant is aware of FR-A-2103881, US-A-4755365, US-A-3811907 and CH-A-217388. FR-A-2103881 describes reducing $ZrO_2.SiO_2$ in the presence of a gaseous reducing atmosphere comprising $H_2$(g) and $S_2$(g). US-A-4755365 and CH-A-217388 use carbon (or petroleum coke) and silicon as reducing agents in a process for making $ZrO_2$ from zircon.

US 3811907 teaches heating a silica-bearing material in a plasma flame, but in the absence of a reducing gas capable of producing $SiO_{(g)}$.

Thus, according to the invention, there is provided a process for treating zircon, which comprises

providing a hot reaction zone comprising a thermal plasma;
maintaining a gaseous reducing atmosphere in the reaction zone;
passing particulate solid zircon ($ZrSiO_4$) through the hot gaseous reducing atmosphere reaction zone in an unsupported manner;
allowing the zircon to heat up to such a degree as it passes through the zone in the unsupported manner, that it dissociates to form a dissociated product ($ZrO_2.SiO_2$) which is converted further into a silicon-rich fraction and a silicon-poor fraction, with the silicon-poor fraction comprising desilicated zircon or zirconia ($ZrO_2$) and with the silica-rich fraction comprising silica ($SiO_2$).

In other words, the zircon starting material is heated to a suitable dissociation temperature in the hot reaction or plasma zone.

Maintaining the gaseous reducing atmosphere in the reaction zone may be effected by feeding a reducing agent into the reaction zone, while maintaining the thermal plasma in the reaction zone. While the reducing agent or reductant can be in solid form, it is preferably in gaseous form. Thus, it may be a volatile hydrocarbon such as methane, a volatile inorganic substance such as hydrogen sulphide ($H_2S$), or hydrogen ($H_2$).

The hot reaction zone is thus provided by thermal plasma generating means. In other words, the hot reaction zone is provided by a plasma flame. A plasma flame provides a thermal plasma of intense localised high enthalpy in the reaction or high temperature plasma zone, in which zone the required dissociation temperatures are achieved. The zircon starting material may be introduced, using suitable techniques, into the thermal plasma in the reaction zone, where dissociation of the zircon will take place to yield a plasma dissociated zircon ('PDZ').

Any suitable plasma generating means may be used, such as a high voltage DC plasma burner, or radio frequency or microwave generated plasmas; however, at least one non-transfer-arc plasma gun or burner is preferred. In accordance with known technology, an inert plasma gas, such as argon (Ar) or nitrogen ($N_2$), may be used with the gun or burner to create the thermal plasma.

The plasma may thus be generated by a plurality of the non-transfer-arc plasma guns. In particular, three such guns, arranged in star fashion with their operative ends being downwardly inwardly directed, may be provided.

The dissociation of the zircon may be achieved at reaction zone or plasma temperatures above about 1700°C, preferably above about 2200°C, and up to about 5000°C. The higher the temperature, the quicker will be the dissociation of zircon.

The passing of the zircon through the reaction zone in said unsupported fashion may be effected by feeding the particulate zircon into a feed zone above the high temperature plasma or reaction zone provided by the plasma flame, and allowing the zircon to free-fall through the plasma or reaction zone while being subjected to the reducing atmosphere, thereby to be dissociated into the plasma dissociated zircon ('PDZ') and thereafter converted into the silicon-rich and zirconia fractions, ie the dissociation and conversion are effected while the zircon particles are in flight.

The process may include feeding the zircon and reductant continuously into the reaction zone, and withdrawing the product fractions from the reactor continuously or on an intermittent basis.

According to one aspect of the invention, the silicon-rich fraction may comprise mainly silica ($SiO_2$), with it and the zirconia fraction collecting at the bottom of the reaction zone in admixed solid particulate form. Thus, the particles of the silicon-rich fraction are physically distinct or separate from those of the zirconia fraction. The average particle size of the mixture will then be less than that of the zircon. Thus, when the average particle size of the zircon is 3-150 $\mu$m, eg 5-100 $\mu$m, the majority of particles of the admixture may be of submicron size. Thus, the average particulate size of the admixture may be $<1$ $\mu$m.

This admixture is suitable for use as an opacifier without further comminution thereof being required. In fact, the particle size thereof can be regulated as desired by controlling the dissociation temperature and/or the intensity of heating of the zircon starting material and/or the proportion of reducing agent fed into the reaction zone. The zirconia fraction or component, which can readily be separated from the finer and pure silica component using known physical or other separating techniques, can also be used as a substitute for baddeleyite. In addition, separation of the mixture

of submicron zirconia component and submicron silica component from residual unreacted zircon and other larger products, can readily be effected using such known separating techniques.

The average particle size of the silica component can be as small as 10 nm. The average particle size of the zirconia fraction can also be as small as 10 nm, but the predominant average particle size thereof is about 100 nm.

Depending on the reducing agent used, the mixture may contain impurities. Thus, if a $CH_4$/neutral gas, eg nitrogen, atmosphere is used, carbon and/or nitrogen contamination may be experienced. The process may then include injecting a suitable agent, eg air, into the tail end of the plasma, ie at the lower end or below the reaction zone, to reduce the contamination.

According to another aspect of the invention, the zircon and/or the fractions produced are heated sufficiently, eg subjected to a sufficiently high temperature in a preferred reducing atmosphere, so that the silicon-rich fraction is in the form of a vapourized reduced silicon oxide, with this fraction being withdrawn from the reaction zone in vapourized form leaving a substantially desilicated zirconia product as residue in the reaction zone. This can naturally be recovered. The reduction of the silica preferably takes place in situ as it is formed.

The reduced silicon-oxide may be silicon monoxide. The withdrawn vapourized fraction may then be treated to convert the silicon monoxide to a substantially purified reconverted silica ($SiO_2$) product. This can then be effected by means of hydrolysis.

The process according to this embodiment of the invention thus entails suitably heating zircon in the heating or reaction zone to form dissociated zircon ($ZrO_2 \cdot SiO_2$), reacting the dissociated zircon with the reductant, to reduce the silica ($SiO_2$) component, preferably in situ, to the silicon monoxide (SiO) product at a temperature sufficient to cause simultaneous vaporisation of the silicon monoxide, continuously removing the vaporised silicon monoxide product to yield a separated substantially desilicated zirconia ($ZrO_2$) product, and subsequently converting the silicon monoxide to a substantially purified silica ($SiO_2$) product.

An important feature of this aspect of the invention comprises the reduction of the silica component of the dissociated zircon, and the removal of the reduced silicon monoxide product, while the zircon is in the dissociated state, and before the back reaction usually associated with dissociated zircon production, whereby the silica component and the zirconia component associate again to form zircon, takes place.

The importance of this feature relates to the need to provide a cost-effective and technically feasible mechanism for separating the silica component of a zircon starting material from the zirconia component once these components are dissociated such as by plasma dissociation. In the plasma dissociation of zircon, a distinct glassy phase ($SiO_2$) and a well dispersed submicron polygonal crystallite phase ($ZrO_2$) are formed. Although it is possible for the glassy phase to be leached from the crystallite phase under relatively mild conditions, such as with alkali solutions at about 150°C, such chemical processing adds to the overall production costs and is thus unattractive from a commercial point of view. However, with plasma dissociation of zircon a commercially attractive zirconia product may be obtained, having inherent attributes of fineness of the crystallite particles and high reactivity towards acid dissolution. The invention provides a method whereby the glassy silica phase may be removed in situ, as it is formed, to obviate the need for and cost of subsequent chemical separation.

According to this aspect of the invention, the reduction of the silica component thus preferably takes place at a temperature at which the zircon is still in a dissociated state and the formed silicon monoxide product is vaporised while the zirconia remains in a finely divided crystalline phase, so that the vaporised silicon monoxide can be removed with a gaseous stream including also excess reductant and/or gaseous or vaporous reaction products, such as steam, and the inert plasma gas which is used in the generation of the thermal plasma.

It will be appreciated that after such removal of a vaporised silicon compound, a substantially desilicated zirconia product will remain, the product being in a fine crystallite form if a suitable cooling procedure is followed.

An important and beneficial consequence of this feature of the invention, is that controlled quenching of the dissociated zircon, to avoid re-association of the two components, is no longer critical. Cooling of the zirconia product remains important, and should preferably take place rapidly, to ensure that a fine particulate product is formed. Furthermore, chemical processing of the plasma dissociated zircon product, after controlled quenching, to remove the silica component for the production of a desilicated zirconia product, is eliminated.

A factor which is of particular relevance to ensure that reduction and vaporisation of the silica component, and removal of the vaporised product, will take place effectively, is the operating temperature at which the reduction and vaporisation and the removal of the vaporised product take place.

At operating temperatures above 1700°C, and preferably above 2200°C, reduction of the silica component and simultaneous evaporation of the silicon monoxide formed, will take place. Removal of the vaporised product should take place before condensation of the silicon monoxide occurs, at a temperature of about 1400°C and below.

This aspect of the invention thus envisages the continuous removal of a gaseous stream including the vaporised silicon monoxide, excess reductant, inert plasma gas, and gaseous or vaporous reaction products, such as steam, at operating temperatures not below, and preferably above 1400°C.

Sufficient reductant should be present to ensure substantially complete reduction of the silica to silicon monoxide. For example, a thermal $Ar/H_2$ plasma containing at least about 40% by volume of hydrogen may accordingly be provided, to bring about substantially complete reduction of the silica component ($SiO_2$) to silicon monoxide (SiO). The reductant, such as $CH_4$ or $H_2$, may conveniently be fed into the plasma burners with the inert plasma gas (Ar) in accordance with known technology.

The removed gaseous stream may be fed to a converter stage, where the silicon monoxide is converted to silica. The temperature in the converter stage may be allowed to fall to about 1400°C and below, when condensation of the SiO will take place, resulting in disproportionation to form highly reactive fine silicon metal (Si) particles, and silica ($SiO_2$).

According to another embodiment of this aspect of the invention, the silicon metal particles may be reacted with steam or a condensed water phase, to form silica ($SiO_2$) with the liberation of hydrogen ($H_2$).

It will be appreciated that the removed gaseous stream including the vaporised silicon monoxide, will also contain steam as a reaction product if the reductant is hydrogen, so that no or little additional steam or water will need to be added to permit the conversion reaction of silicon metal particles into silica to proceed. Excess steam/water may in fact have to be removed from the $Ar/H_2$ recycle stream prior to entering into the initial process feed line. To this end, a dehumidification stage may be provided after the SiO conversion stage, and where moisture may be removed.

The silica ($SiO_2$) formed in the condensation stage and by the reaction of silicon particles with steam/water, may be recovered as a substantially pure, fine particulate product of pyrogenic quality which is suitable to replace purposely manufactured pyrogenic silica in all known applications thereof.

The zirconia product thus obtained is suitable for use in the ceramic industry as well for use as a raw material in the zirconium industry.

The invention and the manner in which it may be carried out will now be explained by way of example, with reference to the accompanying diagrammatic drawings.

In the drawings,

FIGURE 1 shows a schematic representation, in the form of a flow diagram, of a process according to one aspect of the invention, for treating zircon; and

FIGURE 2 shows a similar schematic representation of a process according to a second aspect of the invention, for treating zircon.

Referring to Figure 1, a process 10 according to one aspect of the invention for treating zircon has a thermal reaction zone 11 in which a thermal plasma of high enthalpy and temperature is provided. The temperature of the plasma is at least 1700°C, preferably at least about 2200°C, and may even be as high as about 5000°C.

The thermal plasma may be generated by any suitable plasma generation means, such as one or more high voltage DC plasma burners. The plasma burners (not shown) may be arranged in a suitable configuration, to provide a zone of intense localised heat, into which a particulate material to be treated may be effectively introduced.

A solids feed line 12 is provided, for feeding a particulate zircon starting material, having an average particle size less than 100µm, into the thermal zone 11. If desired, the feed line 12 may be heated, to pre-heat the starting material, and also to remove impurities. It should be understood that the zircon starting material may be obtained from beach sands as a source material so that organic and other impurities may be present.

A gas feed line 14 is provided, to feed an inert plasma gas, which is preferably argon, and a gaseous reductant, which is preferably methane or hydrogen, into the thermal zone 11.

In the thermal zone, the zircon is dissociated into a zirconia component and a silica component, according to the following formula:

$$ZrSiO_4 \xrightarrow[\text{dissociation}]{\text{plasma}} ZrO_2 \cdot SiO_2$$

Simultaneously, the reductant reduces the formed silica to form silicon monoxide, with the formation of steam. This is effected according to the following formula when the reductant is hydrogen:

$$SiO_2 + H_2 \rightarrow SiO + H_2O$$

At the prevalent temperature in the thermal zone 11, the SiO is vaporised, so that a first gaseous stream is continuously removed from the thermal zone 11 via gas output line 16, the gaseous stream including vaporised SiO, steam, excess $H_2$ and argon. It will be appreciated that such continuous removal of vaporised SiO leaves behind the zirconia component, which is recovered through solids output line 18 as a substantially desilicated fine crystallite product.

The gas output line 16 leads to a converter stage 20, where SiO is converted to $SiO_2$. The temperature in the converter stage 20 is permitted to fall below 1400°C, so that the vaporised SiO condenses, resulting in a disproportionation to form $SiO_2$ and highly reactive silicon metal particles, according to the formula

$$2SiO \rightarrow SiO_2 + Si$$

The metal Si particles will react with the steam present in the first gaseous stream, or with a water phase if condensation of steam has taken place, to form $SiO_2$ with the liberation of hydrogen, according to the formula

$$Si + 2H_2O \rightarrow SiO_2 + 2H_2$$

It should be noted that the temperature in the gas output line 16 should not be allowed to fall to the condensation temperature of SiO, ie about 1400°C, to avoid solidification of SiO in the feed line.

The gaseous phase in the converter stage 20, including liberated hydrogen, excess steam and argon, is withdrawn from the converter stage 20 as a second gaseous stream, via line 22, while the formed $SiO_2$ is recovered through the solids output line 24 in the form of a substantially pure fine particulate product.

For the separation of the solid $ZrO_2$ and $SiO_2$ products from the gaseous phases, any suitable separation procedure may be used, such as for example suitable cyclone or.filter bag filtration devices.

The feed line 14 may lead directly into the thermal zone 11, as shown at 26, or into the solids feed line 12, as shown at 28.

Referring to Figure 2, reference numeral 100 generally indicates a process according to a second aspect of the invention, for treating zircon.

Parts of the process 100 which are the same or similar to those of the process 10 are indicated with the same reference numerals.

In the process 100, the silicon-rich fraction is not withdrawn from the zone 11 as a vapourized stream. Instead, the reaction temperature is controlled such that the silicon-rich fraction accumulates, as a silica component, below the reaction zone together with the zirconia fraction, to form an intimate admixture of submicron average particle size. The mixture, after being withdrawn along the flow line, is suitable for use as an opacifier. In the admixture, the zirconia particles are physically distinct from the silica particles.

The process 100 was simulated on laboratory scale in the following examples:

<u>EXAMPLE 1</u>

Zircon (3-15 μm) was allowed to free-fall, in a reaction zone, through a 12kW methane/nitrogen plasma, having a temperature of at least 2000°C, at a rate of 0,5 kg/h. The methane rate into the plasma torch was 0,32 to 0,37 $m^3$/h. The zircon was dissociated and desilicated, and the solid product collected. The product was in the form of a fine black powder consisting of submicron $ZrO_2$ crystallites and $SiO_2$ amorphous powder, as well as some unreacted zircon.

The product had the following characteristics:

- particle sizes ranging from 0,01 to 15 μm
- chemically bound carbon and nitrogen contaminant levels of up to 1% each were obtained
- desilication efficiency of approximately 80% was obtained.

<u>EXAMPLE 2</u>

Zircon (3-15 μm) was allowed to free-fall, in a reaction zone, through a 12kW methane plasma, having a temperature of at least 2000°C, at a rate of 0,5 kg/h. The methane flow rate into the torch was 0,32 to 0,37 $m^3$/h.

Dissociation and desilication of the zircon took place in the reaction zone, and the product was subjected to secondary air contact at the plasma tail to oxidize all the Si-species. The product was collected as a fine white powder.

The product had the following characteristics:

- specific surface area of approximately 27 $m^2/g$
- average particle size of $ZrO_2$ of 0,1 μm
- average particle size of $SiO_2$ of 0,01 μm
- desilication efficiency of approximately 80% was obtained

A product consisting mainly of very fine amorphous $SiO_2$ was collected on filters through which the gaseous product from the reaction zone was passed.

<u>EXAMPLE 3</u>

In a pilot scale apparatus zircon (average particle size 100 μm) was allowed to free-fall through a 100 kW multiple nitrogen plasma burner system, at a feed rate of approximately 30 kg/h, under the mildly reducing atmosphere in the plasma or reaction zone. Quenching was achieved by a countercurrent air stream.

This air stream was cleaned of dust, firstly, in a cyclone and, secondly, in a system of filters. In the cyclone, predominantly PDZ (plasma dissociated zircon) was collected, while the material on the downstream filter consisted to a degree of more than 90% of very fine amorphous silica. In a similar laboratory experiment, the collected material was again essentially pure very fine amorphous silica. Experiments showed that the more aggressive the reducing atmosphere, the more efficient the desilication. For example, better desilication is achieved with methane than with hydrogen, under prevailing plasma conditions.

## Claims

**1.** A process for treating zircon, which comprises

providing a hot reaction zone comprising a thermal plasma;
maintaining a gaseous reducing atmosphere in the reaction zone;
passing particulate solid zircon ($ZrSiO_4$) through the hot gaseous reducing atmosphere reaction zone in an unsupported manner;
allowing the zircon to heat up to such a degree as it passes through the zone in the unsupported manner, that it dissociates to form a dissociated product ($ZrO_2.SiO_2$) which is converted further into a silicon-rich fraction and a silicon-poor fraction, with the silicon-poor fraction comprising desilicated zircon or zirconia ($ZrO_2$) and with the silicon-rich fraction comprising silica ($SiO_2$) .

**2.** A process according to Claim 1, wherein the thermal plasma is provided by a plasma flame generated by at least one non-transfer-arc plasma gun, and wherein the maintaining of the hot reducing atmosphere in the reaction zone is effected by feeding a reducing gas into the reaction zone.

**3.** A process according to Claim 2, which includes vaporizing the $SiO_2$ into vaporized or gaseous reduced silicon oxide, with the silicon-rich fraction being withdrawn from the reaction zone in vaporized form.

**4.** A process according to Claim 3, wherein the reduced silicon-oxide is silicon monoxide, with the withdrawn vaporized fraction being treated to convert it to a silica ($SiO_2$) product.

**5.** A process according to Claim 3 or Claim 4, wherein the passing of the zircon through the reaction or plasma zone in said unsupported fashion is effected by feeding the particulate zircon into a feed zone above the high temperature reaction or plasma zone, and allowing the zircon to free-fall through the reaction or plasma zone while being subjected to the reducing atmosphere, thereby to be dissociated into the plasma dissociated zircon ($ZrO_2.SiO_2$) and thereafter converted into the silicon-rich and zirconia ($ZrO_2$) fractions.

**6.** A process according to any one of Claims 3 to 5 inclusive, wherein the silicon-poor or zirconia fraction collects at the bottom of the reaction zone in solid particulate form, with the average particle size of the fraction being substantially less than that of the zircon.

**7.** A process according to Claim 6, wherein the average particle size of the zircon is 3-150μm, with the majority of particles in the fraction at the bottom of the reaction zone being of submicron size.

**8.** A process according to Claim 2, wherein the silicon-rich fraction and the zirconia fraction collect at the bottom of

the reaction zone in intimately admixed solid particulate form, with the average particle size of the mixture being substantially less than that of the zircon.

**9.** A process according to Claim 8, wherein the average particle size of the zircon is 3-150µm, with the majority of particles of the admixture being of submicron size.

**10.** A process according to Claim 8 or Claim 9, wherein the particulate zirconia and silica admixture is readily separable by physical separation techniques.

**Patentansprüche**

**1.** Verfahren zum Behandeln von Zircon, umfassend das Bereitstellen einer heißen Reaktionszone, umfassend ein thermisches Plasma,

Aufrechterhalten einer gasförmigen reduzierenden Atmosphäre in der Reaktionszone,
Durchleiten von teilchenförmigem festen Zircon ($ZrSiO_4$) durch die Reaktionszone mit der heißen gasförmigen reduzierenden Atmosphäre ohne Träger,
Aufheizenlassen des Zircons in einem solchen Ausmaß, wie es durch die Zone ohne Träger hindurchgeht, daß es dissoziiert unter Bildung eines dissoziierten Produktes ($ZrO_2 \cdot SiO_2$), das weiter in eine siliciumreiche Fraktion und eine siliciumarme Fraktion umgewandelt wird, wobei die siliciumarme Fraktion desilificiertes Zircon oder Zirkoniumoxid ($ZrO_2$) umfaßt und die siliciumreiche Fraktion Siliciumdioxid ($SiO_2$) umfaßt.

**2.** Verfahren nach Anspruch 1, wobei das thermische Plasma bereitgestellt wird durch eine Plasmaflamme, die erzeugt wird durch mindestens eine Nicht-Transfer-Plasmabogenkanone und wobei das Aufrechterhalten der heißen reduzierenden Atmosphäre in der Reaktionszone erreicht wird durch Einspeisen eines reduzierenden Gases in die Reaktionszone.

**3.** Verfahren nach Anspruch 2, umfassend das Verdampfen des $SiO_2$ zu dampfförmigem oder gasförmigem reduziertem Siliciumoxid, wobei die siliciumreiche Fraktion aus der Reaktionszone in verdampfter Form abgezogen wird.

**4.** Verfahren nach Anspruch 3, wobei das reduzierte Siliciumoxid Siliciummonoxid ist und wobei die abgezogene dampfförmige Fraktion behandelt wird, um sie in ein Siliciumdioxid ($SiO_2$)-Produkt umzuwandeln.

**5.** Verfahren nach Anspruch 3 oder 4, wobei das Durchleiten des Zircons durch die Reaktions- oder Plasmazone ohne Träger durchgeführt wird durch Einspeisen des teilchenförmigen Zircons in eine Einspeiszone oberhalb der Hochtemperaturreaktions- oder -Plasmazone und freies Fallenlassen des Zircons durch die Reaktions- oder Plasmazone, während es der reduzierenden Atmosphäre ausgesetzt bleibt, um es dadurch in das Plasma-dissoziierte Zirkon ($ZrO_2 \cdot SiO_2$) zu dissoziieren und dadurch in die siliciumreiche Fraktion und die Zirkoniumoxid ($ZrO_2$)-Fraktion aufzutrennen.

**6.** Verfahren nach einem der Ansprüche 3 bis einschließlich 5, wobei die siliciumarme oder Zirkoniumoxidfraktion sich am Boden der Reaktionszone in fester teilchenförmiger Form ansammelt, wobei die mittlere Teilchengröße der Fraktion wesentlich kleiner ist als diejenige des Zircons.

**7.** Verfahren nach Anspruch 6, wobei die mittlere Teilchengröße des Zircons 3-150 µm beträgt, wobei der größte Teil der Teilchen in der Fraktion am Boden der Reaktionszone im Bereich unter 1 micron liegt.

**8.** Verfahren nach Anspruch 2, wobei die siliciumreiche Fraktion und die Zirkoniumoxidfraktion sich am Boden der Reaktionszone in Form eines innigen Gemisches von festen Teilchen ansammeln, wobei die mittlere Teilchengröße des Gemisches wesentlich kleiner ist als diejenige des Zircons.

**9.** Verfahren nach Anspruch 8, wobei die mittlere Teilchengröße des Zircons 3-150 µm beträgt, wobei der Hauptteil der Teilchen des Gemisches im Bereich unter 1 micron liegt.

**10.** Verfahren nach Anspruch 8 oder Anspruch 9, wobei das teilchenförmige Zirkoniumoxid- und Siliciumdioxidgemisch leicht durch physikalische Trennverfahren getrennt werden kann.

## Revendications

1. Procédé pour traiter du zircon, qui consiste à : disposer d'une zone réactionnelle chaude comprenant un plasma thermique ;

   maintenir une atmosphère réductrice gazeuse dans la zone réactionnelle ;

   faire passer du zircon ($ZrSiO_4$) solide particulaire au travers de la zone réactionnelle sous atmosphère réductrice gazeuse chaude d'une manière non supportée ;

   permettre au zircon de chauffer à un degré tel qu'il traverse la zone d'une manière non supportée, qu'il se dissocie pour former un produit dissocié ($ZrO_2 \cdot SiO_2$) qui est encore converti en une fraction riche en silicium et une fraction pauvre en silicium, la fraction pauvre en silicium comprenant du zircon désilicatisé, ou zircone ($ZrO_2$), et la fraction riche en silicium comprenant de la silice ($SiO_2$).

2. Procédé selon la revendication 1, dans lequel le plasma thermique est fourni par une flamme de plasma générée par au moins un canon à plasma sans arc de transfert, et dans lequel le maintien de l'atmosphère réductrice chaude dans la zone réactionnelle est effectué par introduction d'un gaz réducteur dans la zone réactionnelle.

3. Procédé selon la revendication 2, qui comprend la vaporisation du $SiO_2$ en oxyde de silicium réduit vaporisé ou gazeux, la fraction riche en silicium étant retirée de la zone réactionnelle sous forme vaporisée.

4. Procédé selon la revendication 3, dans lequel l'oxyde de silicium réduit est du monoxyde de silicium, la fraction vaporisée retirée étant traitée pour être convertie en un produit de type silice ($SiO_2$).

5. Procédé selon la revendication 3 ou 4, dans lequel on réalise le passage du zircon au travers de la zone réactionnelle ou de plasma de la manière non supportée en introduisant le zircon particulaire dans une zone d'alimentation au-dessus de la zone réactionnelle ou de plasma à température élevée, et en laissant le zircon tomber librement au travers de la zone réactionnelle ou de plasma tout en subissant l'atmosphère réductrice, de façon qu'il se dissocie en le zircon dissocié par plasma ($ZrO_2 \cdot SiO_2$) et soit ensuite converti en les fractions riche en silicium et de zirconia ($ZrO_2$).

6. Procédé selon l'une quelconque des revendications 3 à 5 comprises, dans lequel la fraction pauvre en silicium ou de zircone est recueillie au fond de la zone réactionnelle sous une forme particulaire solide, la granulométrie moyenne de la fraction étant nettement inférieure à celle du zircon.

7. Procédé selon la revendication 6, dans lequel la granulométrie moyenne du zircon est de 3 à 150 $\mu m$, la majorité des particules dans la fraction au fond de la zone réactionnelle ayant une taille inférieure au micron.

8. Procédé selon la revendication 2, dans lequel la fraction riche en silicium et la fraction de zircone sont recueillies au fond de la zone réactionnelle sous une forme particulaire solide intimement mélangée, la granulométrie moyenne du mélange étant nettement inférieure à celle du zircon.

9. Procédé selon la revendication 8, dans lequel la granulométrie moyenne du zircon est de 3 à 150 $\mu m$, la majorité des particules du mélange ayant une taille inférieure au micron.

10. Procédé selon la revendication 8 ou 9, dans lequel le mélange particulaire de zircone et de silice est facilement séparable par des techniques physiques de séparation.

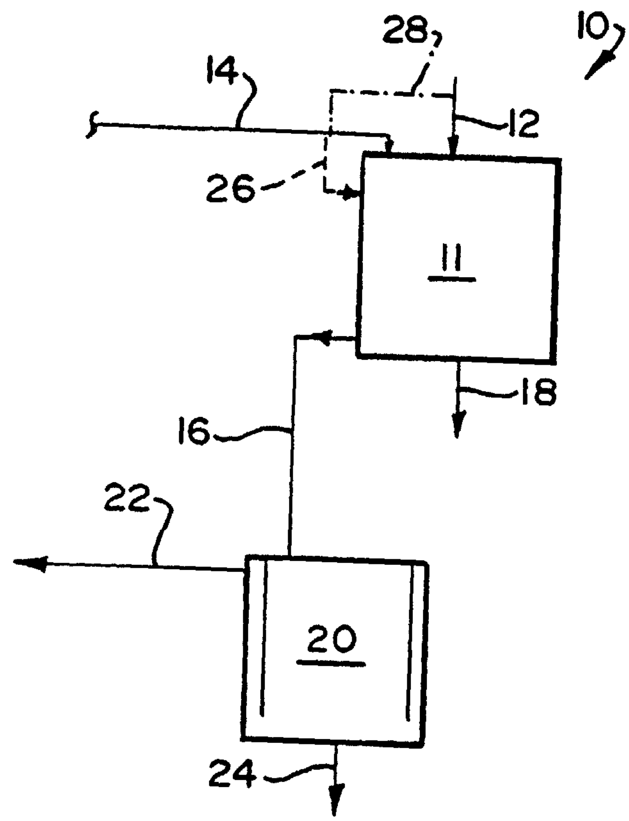


FIG 1

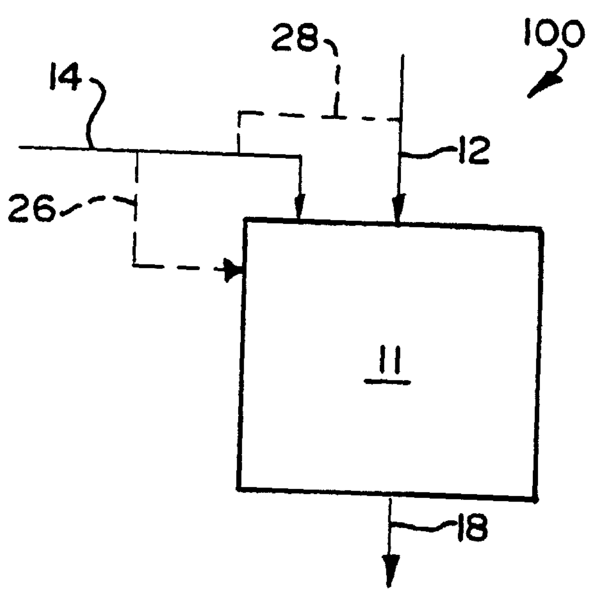


FIG 2